# EUROPÄISCHE PATENTANMELDUNG

(11) **EP 1 729 100 A1**
(43) Veröffentlichungstag der Anmeldung: **06.12.2006**
(21) Anmeldenummer: 06113443.3
(22) Anmeldetag: 03.05.2006
(51) Int. Cl.: G01F 9/00, G01F 1/72, F02M 37/00

(54) **Verfahren und Vorrichtung zur kontinuierlichen Messung eines dynamischen Fluidverbrauchs**

(30) Priorität: 27.05.2005 AT 3512005 U
(71) Anmelder: AVL List GmbH, 8020 Graz (AT)
(72) Erfinder: Christian, Rudolf, 8047, Graz (AT); Schwarzbauer, Hubert, 8411, Hengsberg (AT); Wiesinger, Michael, 8010, Graz (AT)
(74) Vertreter: Laminger, Norbert

(57) **Zusammenfassung**

Verfahren zur kontinuierlichen Messung eines dynamischen Fluidverbrauchs eines Verbrauchers, insbesonders von gasförmigem und flüssigem Kraftstoff, mittels eines kontinuierlich arbeitenden, in beide Richtungen durchströmbaren Durchflusssensors, und allenfalls einer Konditioniereinrichtung, wobei der Druck nach dem Durchflusssensor auf einen konstanten Ausgangsdruck reduziert wird.

Um eine kontinuierliche, genaue und auch zeitlich hoch auflösende Verbrauchsmessung mit geregeltem Ausgangsdruck für Fluide mittels eines offenen Systems zu ermöglichen, bei welcher auch bei hoch dynamischen Verbrauchsänderungen im gesamten Leitungssystem Drücke aufrecht erhalten werden, die die Bildung einer Mehrphasenströmung nicht zulassen, wird zu jedem Zeitpunkt eine Mindestmenge an Fluid über den Druckregler (8) geleitet, wobei Fluid allenfalls in variabler Menge vom Bereich konstanten Ausgangsdrucks zum Bereich zwischen dem Durchflußsensor (6) und dem Druckregler (8) rückgeführt wird.

Für die Vorrichtung zur Durchführung des Verfahrens ist dabei erfindungsgemäß die Druckregeleinrichtung (8) stromabwärts des Durchflusssensors (6) und eine Verbindungsleitung mit einer Pumpeinrichtung (12) vom Bereich hinter der Druckregeleinrichtung (8) zum Bereich zwischen Durchflusssensor (6) und Druckregeleinrichtung (8) vorgesehen.

## Beschreibung

Die Erfindung betrifft ein Verfahren zur kontinuierlichen Messung eines dynamischen Fluidverbrauchs eines Verbrauchers, insbesonders von gasförmigem und flüssigem Kraftstoff, mittels eines kontinuierlich arbeitenden, in beide Richtungen durchströmbaren Durchflusssensors, und allenfalls einer Konditioniereinrichtung, wobei der Druck nach dem Durchflusssensor auf einen konstanten Ausgangsdruck reduziert wird, sowie eine Vorrichtung zur Durchführung des Verfahrens, umfassend einen kontinuierlich arbeitenden Durchflusssensor, einen Druckregler sowie eine Pumpe, allenfalls zumindest eine ausgangseitige Konditioniereinrichtung.

Für die Messung des Verbrauchs von Flüssigkeiten, speziell in der Anwendung für den Kraftstoffverbrauch von Motoren auf Prüfständen wird entweder eine Kombination von Meßgerät und Konditioniergerät verwendet oder es werden diese beiden Aufgaben durch ein integriertes System erfüllt. Aufgabe dieser Anlagen ist es bei hoch genauer Messung des Fluidverbrauchs gleichzeitig eine definierte und reproduzierbare Konditionierung der physikalischen Fluideigenschaften an der Schnittstelle zum Prüfling herzustellen. Das heißt es wird der Druck und die Temperatur auf zumeist einstellbare konstante Werte geregelt.

Für die Meßaufgabe sind diskontinuierlich betriebene Systeme auf Basis von Waagen bekannt. Sie weisen den Vorteil offener Systeme auf, nämlich die Eigenschaft, dass der Kraftstoff sowohl vom Meßsystem abgegeben, als auch zeitweise und im Fördervolumen begrenzt in das System zurückgeführt werden kann. Dabei wird sowohl die abgegebene als auch die rückgeführte Kraftstoffmenge messtechnisch erfasst und bei der Angabe des Verbrauchs berücksichtigt. Offene Systeme erweisen sich insbesondere bei modernen Einspritzsystemen als vorteilhaft, da diese beim Start des Motors während des Druckaufbaus im Einspritzsystem begrenzt Kraftstoff in das Kraftstoffversorgungssystem - beim Fahrzeug letztlich in den Tank - zurückschieben. Als nachteilig erweisen sich derartige Waagen dadurch, dass sie immer wieder nachgefüllt werden müssen, und dadurch kein kontinuierlicher Messbetrieb möglich ist.

Zur kontinuierlichen Messung des Fluidverbrauchs werden oft Meßgeräte herangezogen, die eine volumetrische Messung oder eine Messung des Durchflusses durchführen. Mittels einer zusätzlichen Dichtemessung wird daraus die verbrauchte Kraftstoffmasse ermittelt, die die eigentlich benötigte Meßgröße darstellt. Eine direkte Messung des Masseverbrauches ist mittels heute handelsüblichen Coriolis-Sensoren möglich.

Beim Einsatz dieser Sensoren ist für eine genaue Messung ist darauf zu achten, dass sich in keinem Betriebszustand, d.h. auch bei dynamischen Änderungen des Verbrauchs, eine Mehrphasenströmung einstellt. Dies kann vor allem bei Betrieb mit Otto-Kraftstoffen bei einer lokalen Unterschreitung von einem Mindestdruck vorkommen. Daher wird zumeist vor dem Sensor ein weit höherer Druck aufgebaut als er direkt an der Schnittstelle zum Prüfling benötigt wird.

Für die Konditionierung des Drucks sind unterschiedliche Verfahren und Vorrichtungen bekannt. Beispielsweise ist gemäß AT - 3.350 U eine Druckstabilisierungseinrichtung zur Stabilisierung des Vorlaufdrucks des Massestromsensors vorgesehen, um an der Anschlußstelle des Verbrauchers den geforderten geringen und konstanten Druck (von im Allgemeinen wenigen mbar) erzeugen zu können. Dafür muß ja bei Verwendung von einem Coriolis-Sensor der durchflußabhängige Druckabfall am Massestromsensor (von z.B. bis zu 2 bar) variabel kompensiert werden. Insbesonders müssen hochfrequente, sprunghafte oder pulsartige Entnahmen rasch berücksichtigt werden.

Zur Druckstabilisierung wird daher bei dem oben genannten kontinuierlichen Verfahren der Kraftstoffmessung stromabwärts vom eigentlichen Durchflusssensor eine Druckreguliereinrichtung (Druckregler) angebracht, die den durchflussabhängigen Druck am Ausgang des Meßsystems auf einen konstanten Ausgangsdruck abregelt. Nachteilig bei einem derartigen Aufbau ist, dass konventionelle mechanische Druckregler wie eine "hydraulische Diode" agieren, womit gemeint ist, dass das strömende Medium den Regler nur in eine Richtung, nämlich stromabwärts durchströmen kann. Ein mit einem solchen Druckregler aufgebautes Meßsystem stellt kein offenes System dar. Falls nämlich Kraftstoff von der Einspritzanlage in das Meßsystem rückgeführt werden müsste, oder falls es durch Temperaturanstieg im Kraftstoffkreis bei gestopptem Verbraucher zu einer thermischen Expansion des Kraftstoffes kommt, entsteht, je nach Elastizität der Verrohrung, ein zumeist unzulässig hoher Druckanstieg im Kraftstoffsystem, der Leitungen und Einbauten belastet und allenfalls durch aufwendige Druckausgleichseinrichtungen abgefangen werden muß.

In der AT - 6303 U wurde eine Lösung angegeben, die den Nachteil aufweist, dass zwar begrenzt Kraftstoff rückgeführt werden kann - d.h. das Problem des Druckanstiegs wird befriedigend gelöst - jedoch wird mit der angegebenen Lösung kein offenes System geschaffen, das das Rückströmen über den Durchflußsensor ermöglicht.

In der AT - 6117 U wird erstmals eine Lösung angegeben, die bei kontinuierlicher Messung des Verbrauchs ein offenes System realisiert. Gelöst wird das Problem durch die Regelung des Druckes vor dem Sensor derart, dass hinter dem Sensor der gewünschte Ausgangsdruck vorliegt. Allerdings ist man bei einer derartigen Lösung mit dem Ausgangsdruck des Systems auf den minimalen Eingangsdruck vor dem Durchflußsensor begrenzt. Ein geringerer Druck als dieser kann nicht eingestellt werden. Auch in der US 5 284 120 A ist ein System beschrieben, bei welchem hinter einem Durchflusssensor ein Drucksensor angeordnet ist, der wiederum auf Einrichtungen steuernd einwirkt, die vor dem Durchflusssensor angeordnet sind. Jedoch ist zwischen dem Durchflusssensor und dem Drucksensor ein Druckreduzierventil vorgesehen, um den Ausgangsdruck für den Verbraucher konstant auf Umgebungsdruck abzusenken. Damit liegt wieder ein System vor, in welchem wieder das strömende Medium den Regler nur in eine Richtung, nämlich stromabwärts durchströmen kann, d.h. auch die US 5 284 120 A stellt kein offenes System dar. Eine geringe Menge des Fluids kann zwar durch eine Dämpfungseinrichtung aufgenommen werden, wodurch aber wieder die zeitliche Zuordnung zwischen am Durchflusssensor gemessenen Verbrauch und tatsächlichem Verbrauch verschleiert wird. Die bekannte Anordnung ist daher für zeitlich hoch auflösende genaue Messung des Fluidverbrauchs ungeeignet.

Neben der Konstanz des Drucks für den Prüfling ist die dem Prüfling zugeführte Kraftstofftemperatur von großer Bedeutung. Für Typprüfungen ist es vom Gesetzgeber vorgesehen, dass die Temperatur des Fluids an der Schnittstelle zum Prüfling konstant innerhalb eines definierten Temperaturintervalls liegen muß. Dazu werden Temperatur-Konditioniereinrichtungen verwendet. Sie sind zumeist stromabwärts des Durchflußsensors in den Fluidkreis eingebaut. Entweder sie bilden einen eigenen Konditionierkreis aus, der mittels einem prüflingsnahen sog. Bypass geschlossen wird, oder sie liegen direkt im Motorkreis. Im ersten Fall muß die Zirkulationsmenge im Konditionierkreis mittels einer Pumpe aufrecht erhalten werden. im zweiten Fall ist der Konditionierkreis identisch mit dem Motorkreis und wird von der zumeist prüflingseigenen Pumpe umgewälzt. Vorteilhafter ist die Ausbildung eines eigenen Konditionierkreises, weil in diesem Fall auch ohne Betrieb des Prüflings bereits stabile Druck und Temperaturverhältnisse an der Schnittstelle zum Prüfling (in diesem Fall ist dies der Bypass) geschaffen werden können.

Heute kommerziell erhältliche Kraftstoffmeß- und Konditionieranlagen weisen somit einen Vorkreis vor dem Sensor, der zumeist zur Entlüftung und Abkoppelung von den hauseigenen Kraftstoffleitungen genützt wird und einen Meßkreis auf. Zwischen diesen Kreisen liegt das eigentliche Meßelement der Durchflußsensor. Der Meßkreis besteht entweder aus einem eigenen mittels dem Bypass geschlossen Konditionierkreis und dem Motorkreis oder ausschließlich aus dem Motorkreis.

Von immenser Bedeutung auf die Präzision der Messung ist die Stabilität der mittleren Temperatur oder der im Meßkreis gespeicherten Energie des Fluids, denn jede Temperaturänderung im Volumen stromabwärts des Sensors führt unter der Voraussetzung konstanter geometrischer Verhältnisse (bedingt durch die meist starre Verrohrung) aufgrund der thermischen Ausdehnung des Fluids zu sog. Scheindurchflüssen, die sich in Form von Fehlmessungen des Gesamtsystems äußern.

Aufgabe der vorliegenden Erfindung war es, ein Verfahren und eine Vorrichtung anzugeben, die eine kontinuierliche, genaue und auch zeitlich hoch auflösende Verbrauchsmessung mit geregeltem Ausgangsdruck für Fluide mittels eines offenen Systems ermöglicht - also auch eine zumindest kurz andauernde Rückströmung bei gleichzeitiger Messung des Durchflusses zuläßt - und auch bei hoch dynamischen Verbrauchsänderungen in der Lage ist, im gesamten Leitungssystem Drücke aufrecht zu erhalten, die die Bildung einer Mehrphasenströmung nicht zulassen.

Zur Lösung dieser Aufgabe ist das erfindungsgemäße Verfahren dadurch gekennzeichnet, dass zu jedem Zeitpunkt eine Mindestmenge an Fluid über den Druckregler geleitet wird, wobei kontinuierlich Fluid allenfalls in variabler Menge vom Bereich konstanten Ausgangsdrucks zum Bereich zwischen dem Durchflußsensor und dem Druckregler rückgeführt wird. Damit wird ein sog. Zirkulationskreis um die Druckregeleinrichtung eingeführt, welcher Zirkulationskreis es ermöglicht, dass das Fluid vom Bereich niederen Ausgangsdruck in den zumeist höheren Druckbereich nach dem Durchflußsensor und sodann durch diesen in das System zurückfließen kann. Durch dieses Verfahren wird somit für Durchflüsse kleiner oder gleich der eingestellten Strömungsmenge im Zirkulationskreis ein offenes System realisiert.

Gemäß einer ersten Ausführungsform des Verfahrens ist es vorgesehen, dass die Temperatur des über den Druckregler umgewälzten und/oder des vom Bereich konstanten Ausgangsdrucks zum Bereich zwischen dem Durchflußsensor und dem Druckregler rückgeführten Fluids auf einen annähernd konstanten Wert eingeregelt wird. Somit gelingt es innerhalb des Zirkulationskreises durch die Zu- oder Abfuhr von Energie annähernd konstante thermische Bedingungen zu schaffen, wodurch besonders in einem dynamischen Betrieb Meßfehler aufgrund von thermischer Ausdehnung des Fluids reduziert bzw. vermieden werden.

Vorteilhafterweise wird dabei das über den Druckregler umgewälzte und/oder das vom Bereich konstanten Ausgangsdrucks zum Bereich zwischen dem Durchflußsensor und dem Druckregler rückgeführte Fluid durch zumindest einen Wärmetauscher bzw. eine Konditioniereinrichtung geleitet. Bei dieser Ausführungsform kann der Zirkulationskreis einen herkömmlichen Konditionierkreis ersetzen. In diesem Fall wird nicht nur die durch die dauerhafte allenfalls variable Strömung eingebrachte Leistung innerhalb des Zirkulationskreises abgeführt, sondern die gesamten oder zumindest teilweise sonstige Leistungseinträge innerhalb des Zirkulationskreises abgebaut.

Vorteilhafterweise wird dabei der Zirkulationskreis in unmittelbarer Nähe von z.B. einigen Metern zum Verbraucher mittels eines Bypasses geschlossen, wodurch der Zirkulationskreis gleichzeitig den Konditionierkreis der Anlage bildet.

In einer alternativen Ausführungsform des Verfahrens wird mittels einer zusätzlichen Pumpeinrichtung das Fluid aus dem Zirkulationskreis vom Bereich konstanten Ausgangsdruck hinter der Druckregeleinrichtung kontinuierlich über den sogenannten Bypass in Prüflingsnähe geleitet und in allenfalls variabler Menge in den Zirkulationskreis zurückgeführt. Dabei wird ein allenfalls im Zirkulationskreis vorgesehener Wärmetauscher oder Konditioniereinrichtung vorteilhafterweise von dieser Fluidmenge durchströmt.

In dieser Ausführungsform ist es gemäß einem weiteren Merkmal der Erfindung vorgesehen, dass der Druck des Fluids, das vom Bypass dem Verbraucher zugeführt wird unabhängig vom konstanten Ausgangsdruck nach dem Durchflußsensor im Bypass geregelt wird. Damit kann der Vorlaufdruck unabhängig von Rücklaufdruck eingestellt werden.

Vorteilhafte Ausführungsformen sehen dabei vor, dass die den Wärmetauscher oder Konditioniereinrichtung durchströmende Fluidmenge die dem Verbraucher zugeführte Menge übersteigt. Dadurch kann gewährleistet werden, dass dem Prüfling immer Fluid konstanter Temperatur zugeführt wird.

Erfindungsgemäß ist es weiters vor allem für Prüflinge mit hohen Umwälzmengen von beispielsweise höher als 500 l/h vorgesehen die Temperatur in dem dem Konditionierkreis und dem Motorkreis gemeinsamen Teilstück, dem Bypass, mit einer zusätzlichen Konditioniereinrichtung zu regeln.

Dabei ist es in einer Variante vorgesehen, die zwei Temperaturregelungen oder Konditioniereinrichtungen unabhängig von einander zu regeln.

Vorzugsweise wird dabei auch die Temperatur des durch den Verbraucher umgewälzten Fluids mit einem zusätzlichen Wärmetauscher oder einer allfälligen zusätzlichen Konditioniereinrichtung auf einen annähernd konstanten Wert eingeregelt. Dies ist insbesonders bei Verbrauchern mit höheren Umwälzmengen, beispielsweise höher als 500 l/h, vorteilhaft, bei welchen somit ein zusätzlicher Konditionierkreis gebildet ist.

Gemäß einer vorteilhaften Ausführungsform des Verfahrens werden Blasen, die sich im durch den Verbraucher umgewälzten Fluid befinden mittels einer Separationseinrichtung in den Zirkulationskreis rückgeführt.

Auch kann vorgesehen sein, dass allenfalls auftretende Luftblasen im Fluidkreis hinter dem Durchflußsssensor mittels einer Separationseinrichtung separiert, gesammelt und nach Bedarf aus dem Fluidkreis abgeleitet werden.

Gemäß einer weiteren vorteilhaften Ausführungsform der Erfindung wird nahe dem Verbraucher entzogene Leistung dem Fluid entfernt vom Verbraucher, vorzugsweise nach dem Durchflusssensor wieder zugeführt. Dieses Merkmal gestattet eine besonders wirtschaftliche Umsetzung des erfindungsgemäßen Verfahrens mit vorzugsweise nur einem Regelkreis. Sowohl die Kosten der Realisierung des Verfahrens als auch die Kosten des laufenden Betriebs sind geringer als bei unabhängiger Regelung beider Kreise.

Vorzugsweise ist dabei vorgesehen, dass die innere Energie zumindest im Bereich stromabwärts des Durchflusssensors auf einen im wesentlichen konstanten Wert einstellt wird.

Um die Qualität der Messung zu charakterisieren, können gemäß einem weiteren Merkmal der Erfindung aufgrund der zu- und abgeführten Leistung Stabilitätsaussagen generiert werden.

Die eingangs beschriebene Vorrichtung ist zur Lösung der gestellten Aufgabe dadurch gekennzeichnet, dass eine Druckregeleinrichtung stromabwärts des Durchflusssensors vorgesehen ist, und dass eine Verbindungsleitung mit einer Pumpeinrichtung vom Bereich hinter der Druckregeleinrichtung zum Bereich zwischen Durchflusssensor und Druckregeleinrichtung vorgesehen ist. Damit entsteht stromabwärts vom Durchflußsensor ein sog. Zirkulationskreis, in welchem das Fluid vom Bereich niederen Ausgangsdrucks in den zumeist höheren Druckbereich nach dem Durchflußsensor und sodann weitere in das stromaufwärts gelegene System zurückfließen kann. Damit ist für Durchflüsse kleiner oder gleich der eingestellten Strömungsmenge im Zirkulationskreis ein offenes System realisiert.

Eine erste vorteilhafte Ausgestaltung der Erfindung sieht vor, dass vom Vorlauf zum Verbraucher eine Bypassleitung abzweigt und hinter dem Verbraucher in den Rücklauf mündet, wodurch im Zirkulationskreis auch die Aufgabe des Konditionierkreises erfüllt wird.

Gemäß einer weiteren vorteilhaften Ausführungsform der erfindungsgemäßen Vorrichtung ist zwischen der Druckregeleinrichtung und der Pumpeinrichtung zumindest ein Wärmetauscher, vorzugsweise eine Konditioniereinrichtung, eingesetzt.

Dabei kann vorteilhafterweise vorgesehen sein, dass zwischen Druckregeleinrichtung und Pumpeinrichtung, vorzugsweise hinter dem zumindest einen Wärmetauscher bzw. der Konditioniereinrichtung, ein oder mehrere Temperatursensoren eingesetzt sind, die mit einer Regeleinrichtung für den zumindest einen Wärmetauscher bzw. die Konditioniereinrichtung verbunden sind.

Eine weitere Ausgestaltung des erfindungsgemäßen Systems ist dadurch gekennzeichnet, dass hinter der Abzweigung der Verbindungsleitung und vorzugsweise vor der Einmündung von Vor- und Rücklaufleitung des Verbrauchers eine zusätzliche Pumpeinrichtung eingesetzt ist Durch diese Ausgestaltung kann auch bei hohen Umwälzmengen im Motorkreis unabhängig von der Zirkulationsmenge die Temperatur des dem Prüfling zugeführten Fluids konstant gehalten werden.

In einer weiteren Ausgestaltung ist es vorgesehen in der Bypassleitung zwischen Vorlauf und Rücklauf ein weiterer Druckregler einzusetzen. Durch diese Ausgestaltung können Vorlaufdruck und Rücklaufdruck für den Verbraucher unabhängig voneinander eingestellt werden.

Gemäß einem weiteren Merkmal der Erfindung ist in der Bypassleitung zwischen Vorlauf und Rücklauf ein Wärmetauscher, vorzugsweise eine Konditioniereinrichtung, vorgesehen. Damit kann in jedem Fall, auch wenn die Umwälzmenge des Konditionierkreises geringer ist als die Umwälzmenge des Verbrauchers, die thermischen Eigenschaften im Motorkreis aufrecht erhalten werden.

Vorteilhafterweise sind ein oder mehrere Temperaturmeßelemente in der Bypass-Leitung eingesetzt und mit einer Regeleinrichtung für den zumindest einen Wärmetauscher bzw. die Konditioniereinrichtung verbunden, um die Temperatur des Fluids im Zirkulations- bzw. Konditionierkreis zu messen und die Wärmezu- und abfuhr mit einer Regeleinrichtung derart zu regeln, dass der thermische Zustand des Fluids annähernd konstant ist.

Um eine wirtschaftliche Auslegung und einen wirtschaftlichen Betrieb der Vorrichtung zu erreichen, können alle Wärmetauscher durch eine gemeinsame Regeleinrichtung gesteuert sein, die vorzugsweise mit dem in der Bypass-Leitung eingesetzten Temperaturfühlern verbunden ist.

Besonders vorteilhaft ist dabei eine Ausführungsform, bei welcher die Wärmetauscher über vorzugsweise einen Kühlsolekreis in Serie geschaltet sind, wobei vorzugsweise der oder alle hinter der Abzweigung der Verbindungsleitung vorgesehene Wärmetauscher vor dem oder allen vor der Abzweigung der Verbindungsleitung vorgesehenen Wärmetauschern geschaltet sind. In diesem Fall wird der Wärmetauscher, der sich in unmittelbarer Nähe zum Prüfling im Bypass befindet in Abhängigkeit der sich dort einstellenden Temperatur geregelt. Der Wärmetauscher im Zirkulationskreis wird sodann mit der aus diesem Wärmetauscher kommenden Kühlsole beaufschlagt. Damit wird vor allem im laufenden Betrieb die zumeist durch den Prüfling eingebrachte Leistung dazu verwendet, um den zumeist kühlen in den Zirkulationskreis nachfließenden Kraftstoff zu erwärmen.

Gemäß einer weiteren vorteilhaften Ausführungsform ist vor der Vorlaufleitung des Verbrauchers eine Blasenseparationseinrichtung vorgesehen.

Wenn eine Einrichtung zur Überwachung von einer oder mehreren charakteristischen Temperaturen des Fluids oder der Kühlsole, beispielweise einer Wärmetauscher-Eintrittstemperatur, vorgesehen ist, in welcher ein Programm zur Ermittlung eines Stabilitätskriteriums auf Basis der überwachten Werte abgelegt ist, kann daraus die Qualität der Messung bewertet werden. In dieser speziellen Ausführungsform der Erfindung ist es vorgesehen, soferne der thermische Zustand des Fluids mittels Regelung kontrolliert wird, auf Basis der Änderung von einer oder mehreren charakteristischen Temperaturen des Fluids oder der Kühlsole, beispielweise einer Wärmetauscher-Eintrittstemperatur, ein Stabilitätskriterium abzuleiten und an ein übergeordnetes System zu übertragen. Abgeleitet von diesem Kriterium können auch vorteilhafterweise Plausibilitätsaussagen über die Qualität der Kraftstoffverbrauchsmeßwerte abgeleitet werden.

Vorteilhafterweise können noch zusätzliche Durchfluß- und Temperatursensoren im Rücklauf des Verbrauchers eingesetzt und mit der Regeleinrichtung für die Wärmetauscher bzw. die Konditioniereinrichtungen verbunden sein.

Eine weitere vorteilhafte Ausführungsform der erfindungsgemäßen Vorrichtung ist dadurch gekennzeichnet, dass zwischen der Druckregeleinrichtung und der Abzweigung der Verbindungsleitung eine Blasenseparationseinrichtung vorgesehen ist.

Vorzugsweise ist die Blasenseparationseinrichtung mit einer Einrichtung zur Sammlung von Blasen verbunden.

Besonders vorteilhaft ist es dabei, wenn ein Ventil vorgesehen ist, dass das Abführen der in der Einrichtung zur Sammlung von Blasen gesammelten Blasen ermöglicht.

In der nachfolgenden Beschreibung soll die Erfindung anhand eines Ausführungsbeispiels unter Bezugnahme der beigefügte Zeichnung erläutert werden.

Die Zeichnungsfigur zeigt das Flußschaltbild einer erfindungsgemäßen Vorrichtung.

Über ein Füllventil 1 wird in Abhängigkeit des Füllstands zyklisch ein Entlüftungstank 2 mit Kraftstoff versorgt. Im Vorkreis A, bestehend aus einer Kraftstoffpumpe 3, einem Kraftstoff-Kühlsole Wärmetauscher 4 und einem Druckregler 5 wird der Kraftstoff auf einen konstanten Vordruck gebracht. Der Entlüftungstank 2 hat die Funktion einerseits im Entlüftungsbetrieb Blasen aus dem Kraftstoff entweichen zu lasen und vor allem im Fall von Rückströmungen aus den stromabwärts liegenden Kraftstoffkreisen B, C oder D den rückströmenden Kraftstoff wieder aufnehmen zu können. Der Wärmetauscher 4 dient dazu im Fall von nur geringem oder keinem Verbrauch die durch die Pumpe 3 eingebrachte Leistung dem Kraftstoff zu entziehen. Mittels des Durchflußsensors 6 wird die eigentliche Meßgröße, der Kraftstoffverbrauch, kontinuierlich erfasst. Das Absperrventil 7 dient zur Justierung des Nullpunktes des Durchflußsensors.

Der erfindungsgemäß vorgesehene Zirkulationskreis B besteht aus einer Druckregeleinrichtung 8, einem Kraftstoff-Kühlsole-Wärmetauscher 9, optional einem Temperatursensor 10, einem Blasenseparator 11, der in diesem Fall gleichzeitig als Filter dient, einer Kraftstoffpumpe 12 und zwei Entlüftungsventilen 13a und 13b. Mittels der Kraftstoffpumpe 12 wird nun im Betrieb der Vorrichtung eine Mindestströmung über den Druckregler 8 im Zirkulationskreis B eingeprägt. Sofern nun aus den stromabwärts liegenden Kreisen C, D Kraftstoff rückgeführt wird, kann dieser via dem Entlüftungsventil 13b und 13a in die Rohrleitung zwischen Durchflußsensor 6 und Druckregeleinrichtung 8 rückgeführt werden und über den Durchflußsensor 6 zurück in den Vorkreis A gelangen.

Der Wärmetauscher 9 im Zirkulationskreis B wird gemäß dem dargestellten Ausführungsbeispiel zur Konditionierung des Kraftstoffs auf die gewünschte Kraftstoff-Vorlauftemperatur genützt, die am Temperatursensor 10 abgegriffen werden kann. In der Blasen-Separationseinrichtung 11 werden allenfalls im Kreis befindliche Blasen gesammelt. Diese können durch Umschalten der beiden Entlüftungsventile 13a und 13b über die zum Durchflußsensor 6 parallelen Leitung in den Entlüftungstank 2 geleitet werden.

Der Konditionierkreis C wird gebildet aus einer weiteren Kraftstoffpumpe 14, einem weiteren Kraftstoff-Kühlsole-Wärmetauscher 15, einem Temperatursensor 16 und einer Blasenseparationseinrichtung 17, die gewährleistet, dass Blasen gesichert aus dem Motorkreis D in den Konditionierkreis C zurück geleitet werden. Die einen Bypass zum Verbraucher bildenden Komponenten 15, 16 und 17 sind in Motornähe angebracht. Geschlossen wird er Konditionierkreis C über den Wärmetauscher 9 und die Blasenseparationseinrichtung 11, die den beiden Kreisen B und C, d.h. dem Zirkulations- und Konditionierkreis, gemeinsam sind.

Der Motorkreis D wird gebildet aus der Motor-Vorlaufleitung 18, dem Motor und der Motor-Rücklaufleitung 19, sowie dem Bypass.

Der Wasserkreis besteht aus zwei Teilen: dem den Wärmetauscher 4 versorgenden Teil, der über das Proportionalventil 20 geregelt wird und dem die Wärmetauscher 15 und 9 versorgenden Teil. Dieser zweite Teil wird mit einer Wasser-Umwälzpumpe 21 über eine Heizung 22, die beiden Wärmetauscher 15 und 9 und ein Ventil 23 umgewälzt. Die Temperaturregelung der Wassertemperatur wird in Abhängigkeit der angezeigten Temperatur des Sensors 24 mittels der Heizeinrichtung 22 und dem Auslaßventil 25 geregelt.

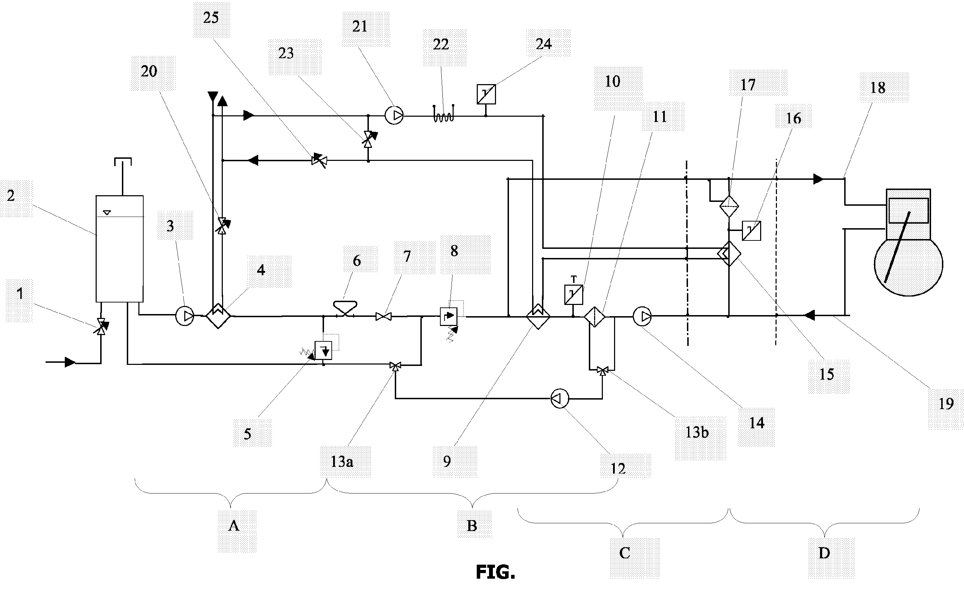

Steuerungs- und Regelaufgaben sowie die Aufbereitung und Auswertung der Messwerte erfolgen in der zentralen Einheit, die in Figur 1 nicht gezeigt ist.

## Patentansprüche

1. Verfahren zur kontinuierlichen Messung eines dynamischen Fluidverbrauchs eines Verbrauchers, insbesonders von gasförmigem und flüssigem Kraftstoff, mittels eines kontinuierlich arbeitenden, in beide Richtungen durchströmbaren Durchflusssensors, und allenfalls einer Konditioniereinrichtung, wobei der Druck nach dem Durchflusssensor auf einen konstanten Ausgangsdruck reduziert wird, **dadurch gekennzeichnet, daß** zu jedem Zeitpunkt eine Mindestmenge an Fluid über den Druckregler (8) geleitet wird, wobei kontinuierlich Fluid allenfalls in variabler Menge vom Bereich konstanten Ausgangsdrucks zum Bereich zwischen dem Durchflusssensor (6) und dem Druckregler (8) rückgeführt wird.

2. Verfahren nach Anspruch 1, **dadurch gekennzeichnet, dass** die Temperatur des über den Druckregler (8) umgewälzten und/oder des vom Bereich konstanten Ausgangsdrucks zum Bereich zwischen dem Durchflusssensor (6) und dem Druckregler (8) rückgeführten Fluids auf einen annähernd konstanten Wert eingeregelt wird.

3. Verfahren nach Anspruch 2, **dadurch gekennzeichnet, dass** das über den Druckregler (8) umgewälzte und/oder das vom Bereich konstanten Ausgangsdrucks zum Bereich zwischen dem Durchflußsensor (6) und dem Druckregler (8) rückgeführte Fluid durch zumindest einen Wärmetauscher (9) bzw. eine Konditioniereinrichtung geleitet wird.

4. Verfahren nach einem der Ansprüche 1 bis 3, **dadurch gekennzeichnet, dass** mittels einer zusätzlichen Pumpeinrichtung (14) Fluid in unmittelbare Nähe des Verbrauchers gepumpt wird und über einen Bypass in allenfalls variabler Menge in den Bereich konstanten Ausgangsdruck hinter dem Druckregler rückgeführt wird.

5. Verfahren nach Anspruch 4, **dadurch gekennzeichnet, dass** der Druck des dem Verbraucher zugeführten Fluids unabhängig vom konstanten Ausgangsdruck nach dem Durchflußsensor (6) geregelt wird.

6. Verfahren nach einem der Ansprüche 3 bis 5, **dadurch gekennzeichnet, dass** die den Wärmetauscher (9) bzw. die Konditioniereinrichtung durchströmende Fluidmenge die dem Verbraucher zugeführte Menge übersteigt.

7. Verfahren einem der Ansprüche 2 bis 6, **dadurch gekennzeichnet, dass** die Temperatur des durch den Verbraucher umgewälzten Fluids mit einem zusätzlichen Wärmetauscher (15) oder einer allfälligen zusätzlichen Konditioniereinrichtung auf einen annähernd konstanten Wert eingeregelt wird.

8. Verfahren nach einem der Ansprüche 2 bis 7, **dadurch gekennzeichnet, dass** Blasen, die sich im durch den Verbraucher umgewälzten Fluid befinden mittels einer Separationseinrichtung (17) in den Zirkulationskreis rückgeführt werden.

9. Verfahren nach einem der Ansprüche 1 bis 8, **dadurch gekennzeichnet, dass** allenfalls auftretende Luftblasen im Fluidkreis hinter dem Durchflusssensor (6) mittels einer Separationseinrichtung (11) separiert, gesammelt und nach Bedarf aus dem Fluidkreis abgeleitet werden.

10. Verfahren nach einem der Ansprüche 1 bis 9, **dadurch gekennzeichnet, dass** nahe dem Verbraucher entzogene Leistung dem Fluid entfernt vom Verbraucher, vorzugsweise nach dem Durchflusssensor (6) wieder zugeführt wird.

11. Verfahren nach einem der Ansprüche 1 bis 10, **dadurch gekennzeichnet, dass** die innere Energie zumindest im Bereich stromabwärts des Durchflusssensors (6) auf einen im wesentlichen konstanten Wert einstellt wird.

12. Verfahren nach einem der Ansprüche 1 bis 11, **dadurch gekennzeichnet, dass** aufgrund der zu- und abgeführten Leistung Stabilitätsaussagen über die Qualität der Durchflußmessung generiert werden.

13. Vorrichtung zur kontinuierlichen Messung eines dynamischen Fluidverbrauchs eines Verbrauchers, umfassend einen kontinuierlich arbeitenden Durchflusssensor, einen Druckregler sowie eine Pumpe, allenfalls eine ausgangseitige Konditioniereinrichtung, **dadurch gekennzeichnet, dass** die Druckregeleinrichtung (8) stromabwärts des Durchflusssensors (6) vorgesehen ist, und dass eine Verbindungsleitung mit einer Pumpeinrichtung (12) vom Bereich hinter der Druckregeleinrichtung (8) zum Bereich zwischen Durchflusssensor (6) und Druckregeleinrichtung (8) vorgesehen ist.

14. Vorrichtung nach Anspruch 13, **dadurch gekennzeichnet, dass** vom Vorlauf (18) zum Verbraucher eine Bypassleitung abzweigt und hinter dem Verbraucher in den Rücklauf (19) mündet.

15. Vorrichtung nach Anspruch 13 oder 14, **dadurch gekennzeichnet, dass** zwischen der Druckregeleinrichtung (8) und der Pumpeinrichtung (12) zumindest ein Wärmetauscher (9), vorzugsweise eine Konditioniereinrichtung, eingesetzt ist.

16. Vorrichtung nach einem der Ansprüche 13 bis 15, **dadurch gekennzeichnet, dass** zwischen Druckregeleinrichtung (8) und Pumpeinrichtung (12), vorzugsweise hinter dem einen Wärmetauscher (9) bzw. der Konditioniereinrichtung, ein oder mehrere Temperatursensoren (10) eingesetzt sind, die mit einer Regeleinrichtung für den zumindest einen Wärmetauscher (9) bzw. die Konditioniereinrichtung verbunden sind.

17. Vorrichtung nach einem der Ansprüche 13 bis 16, **dadurch gekennzeichnet, dass** hinter der Abzweigung der Verbindungsleitung und vorzugsweise vor der Einmündung von Vor- (18) und Rücklaufleitung (19) des Verbrauchers eine zusätzliche Pumpeinrichtung (14) eingesetzt ist.

18. Vorrichtung nach Anspruch 17, **dadurch gekennzeichnet, dass** in der Bypassleitung zwischen Vorlauf (18) und Rücklauf (19) ein weiterer Druckregler eingesetzt ist.

19. Vorrichtung nach einem der Ansprüche 13 bis 17, **dadurch gekennzeichnet, dass** in der Bypassleitung zwischen Vorlauf (18) und Rücklauf (19) ein Wärmetauscher (15), vorzugsweise eine Konditioniereinrichtung, vorgesehen ist.

20. Vorrichtung nach Anspruch 19, **dadurch gekennzeichnet, dass** ein oder mehrere Temperaturmeßelemente (16) in der Bypass-Leitung eingesetzt sind und mit einer Regeleinrichtung für den zumindest einen Wärmetauscher (15) bzw. die Konditioniereinrichtung verbunden sind.

21. Vorrichtung nach einem der Ansprüche 13 bis 20, **dadurch gekennzeichnet, dass** alle Wärmetauscher (9, 15) durch eine gemeinsame Regeleinrichtung gesteuert sind, die vorzugsweise mit dem in der Bypass-Leitung eingesetzten Temperaturfühlern (16) verbunden ist.

22. Vorrichtung nach einem der Ansprüche 13 bis 21, **dadurch gekennzeichnet, dass** die Wärmetauscher (9, 15) über vorzugsweise einen Kühlsolekreis in Serie geschaltet sind, wobei vorzugsweise der oder alle hinter der Abzweigung der Verbindungsleitung vorgesehene Wärmetauscher (15) vor dem oder allen vor der Abzweigung der Verbindungsleitung vorgesehenen Wärmetauschern (9) geschaltet sind.

23. Vorrichtung nach einem der Ansprüche 13 bis 22, **dadurch gekennzeichnet, dass** vor der Vorlaufleitung des Verbrauchers (18) eine Blasenseparationseinrichtung (17) vorgesehen ist.

24. Vorrichtung nach einem der Ansprüche 13 bis 23, **dadurch gekennzeichnet, dass** eine Einrichtung zur Überwachung von einer oder mehreren charakteristischen Temperaturen des Fluids oder der Kühlsole, beispielweise einer Wärmetauscher-Eintrittstemperatur, vorgesehen ist, in welcher ein Programm zur Ermittlung eines Stabilitätskriteriums auf Basis der überwachten Werte abgelegt ist.

25. Vorrichtung nach einem der Ansprüche 13 bis 24, **dadurch gekennzeichnet, dass** zusätzliche Durchfluss- und Temperatursensoren im Rücklauf des Verbrauchers (19) eingesetzt sind und mit der Regeleinrichtung für die Wärmetauscher (9, 15) bzw. die Konditioniereinrichtungen verbunden sind.

26. Vorrichtung nach einem der Ansprüche 13 bis 25, **dadurch gekennzeichnet, dass** zwischen der Druckregeleinrichtung (8) und der Abzweigung der Verbindungsleitung eine Blasenseparationseinrichtung (11) vorgesehen ist.

27. Vorrichtung nach Anspruch 26, **dadurch gekennzeichnet, dass** die Blasenseparationseinrichtung (11) mit einer Einrichtung zur Sammlung von Blasen verbunden ist.

28. Vorrichtung nach Anspruch 27, **dadurch gekennzeichnet, dass** ein Ventil (13b) vorgesehen ist, dass das Abführen der in der Einrichtung zur Sammlung von Blasen gesammelten Blasen ermöglicht.
